# EUROPÄISCHE PATENTSCHRIFT

(11) **EP 1 214 767 B1**
(45) Veröffentlichungstag und Bekanntmachung des Hinweises auf die Patenterteilung: **02.05.2003**
(21) Anmeldenummer: 00967664.4
(22) Anmeldetag: 12.09.2000
(51) Int. Cl.: H02G 3/04

(54) **SCHUTZUMHÜLLUNG FÜR ELEKTRISCHE LEITUNGEN UND VERFAHREN ZUR HERSTELLUNG EINER SOLCHEN SCHUTZUMHÜLLUNG**
PROTECTIVE COVER FOR ELECTRIC WIRES AND METHOD OF PRODUCING SUCH A PROTECTIVE COVER
ENVELOPPE DE PROTECTION POUR LIGNES ELECTRIQUES ET SON PROCEDE DE FABRICATION

(30) Priorität: 13.09.1999 DE 19943763; 07.02.2000 DE 10005315
(43) Veröffentlichungstag der Anmeldung: 19.06.2002
(73) Patentinhaber: Schlemmer GmbH, 85586 Poing (DE)
(72) Erfinder: STARK, Stefan, 80798 München (DE); MUTSCHLECHNER, Klaus, I-3903 Bruneck (IT); VOLL-MARJANOVIC, Mile, 97437 Hassfurt (DE)
(74) Vertreter: Fehners, Klaus Friedrich, Dipl.-Ing., Dipl.-Wirtsch.-Ing.
(86) Internationale Anmeldenummer: EP0008916
(87) Internationale Veröffentlichungsnummer: WO01020738

(56) Entgegenhaltungen:
- DE-A- 4 410 706

## Beschreibung

Die Erfindung bezieht sich auf eine Schutzumhüllung für elektrische Leitungen. umfassend einen schlauchartigen Körper, der im Querschnitt annähernd kastenförmig mit zwei einander gegenüberliegenden Breitseiten und zwei einander gegenüberliegenden Schmalseiten ausgebildet ist, und der entlang mindestens einer seiner Schmalseiten einen lösbaren Verschluß aufweist. welcher durch jeweils an Wandabschnitte der Breitseiten einstückig angeformte, miteinander verrastbare Seitenwandabschnitte gebildet ist.

Unter elektrischen Flachleitungen werden unter anderem Flachbandleitungen und dünnwandige Folienleitungen verstanden. Flachbandleitungen weisen eine Vielzahl von elektrischen Einzelleitern mit jeweils kompakter Querschnittsform auf, die in ein flächenhaftes, elektrisch isolierendes Trägersubstrat eingebettet sind. Vorzugsweise verlaufen die Einzelleiter dabei parallel nebeneinander. Bei Folienleitungen sind die Einzelleiter hingegen selbst flächenhaft ausgebildet, wobei die Anordnung mehrerer Einzelleiter bevorzugt schichtweise erfolgt. Derartige Leitungen werden beispielsweise in Kabelbäumen von Kraftfahrzeugen verwendet, um eine Vielzahl von elektrischen Einrichtungen miteinander zu verbinden.

Oftmals ist es erforderlich, eine elektrische Leitung oder auch ein Leitungsbündel gegen äußere Einwirkungen zu schützen. Hierzu ist es bereits allgemein bekannt, die elektrische Leitung oder das Leitungsbündel mit einer Schutzumhüllung zu umgeben, die ein im wesentlichen kreisringförmiges Profil sowie eine relativ hohe Steifigkeit aufweist. Aufgrund dieser Eigenarten ist mit den bekannten Schutzumhüllungen jedoch eine raumsparende und flexible Verlegung einer elektrischen Leitung bei stark beengten Raumverhältnissen nicht möglich. Zudem besteht gerade bei Folienleitungen die Gefahr von Beschädigungen der Einzelleiter, wenn diese Schwingungen oder Erschütterungen ausgesetzt werden.

Überdies ist bei den bisher bekannten Schutzumhüllungen die Bestückung mit einer oder mehreren elektrischen Leitungen umständlich. So ist beispielsweise aus der DE 196 41 421 C2 eine Schutzumhüllung bekannt, die aus einem schlauchförmigen Körper hergestellt ist. Dieser schlauchförmige Köper wird in seiner Längsrichtung geschlitzt, um eine Öffnung zum Einlegen der elektrischen Leitung auszubilden. Die Öffnungskanten sind dabei miteinander verrastbar. Zum Einlegen einer elektrischen Leitung muß die Schutzumhüllung geöffnet werden. Hierfür wird allerdings ein eigenes Werkzeug benötigt. Insbesondere dann, wenn eine längere Schutzumhüllung mit mehreren Leitungen bestückt werden soll, ist die Handhabung schwierig, da gleichzeitig einerseits die Schutzumhüllung offen gehalten werden muß, andererseits aber die Leitungen zu positionieren sind.

Aus der DE 44 10 706 A1 ist bereits eine Schutzumhüllung bekannt, die einen im wesentlichen rechteckförmigen Querschnitt aufweist, mit zwei Breitseiten und zwei Schmalseiten, wobei eine der Schmalseiten einen lösbaren bzw. wiederverschließbaren Verschluß aufweist und die andere, nach Art eines Schamieres ausgebildete Schmalseite erlaubt, die Breitseiten des kastenförmigen Wellenschlauches gegeneinander zu verschränken. Dabei stellt die geöffnete Stellung des Wellenschlauches die Ruhestellung desselben dar, indem die Leitungen in den Wellenschlauch hinein gelegt bzw. aus diesem wieder herausgenommen werden können, wobei die geschlossene Betriebsstellung den Wellenschlauch umfangseitig vorspannt.

Werden in diese bekannten Schutzumhüllungen Leitungen hineingelegt, beispielsweise auch einzelne, nicht miteinander verbundene Leiter oder auch zu Kabelbäumen zusammen gebundene Kabel, die jedoch einen geringeren Durchmesser aufweisen, als der Innendurchmesser bzw. die Innenabmessungen der Schutzumhüllungen, können die elektrischen Leitungen in diesen Schutzumhüllungen sich bewegen und gegen die Innenwandungen anschlagen und Geräusche verursachen und dadurch auch verletzt werden.

Der Erfindung liegt demgegenüber die Aufgabe zugrunde, eine Schutzumhüllung für elektrische Flachleitungen zu schaffen, die eine raumsparende, flexible Verlegung der eingehüllten Leitung zuläßt und überdies eine einfache Konfektionierung erlaubt sowie eine hohe Sicherheit gegen Beschädigungen aufweist.

Diese Aufgabe wird durch eine Schutzumhüllung der eingangs beschriebenen Art gelöst, bei der die Innenwand des schlauchartigen Körpers an den Breitseiten mit Anlageflächen zum Halten der elektrischen Leitung (E) zwischen diesen versehen ist, wobei die Anlageflächen sich im geschlossenen Zustand der Schutzumhüllung gegenseitig berühren und, bei eingelegter elektrischer Flachleitung, diese zwischen sich einklemmend halten.

Die erfindungsgemäße Schutzumhüllung bietet einen zuverlässigen Schutz gegen Beschädigungen der elektrischen Leitung. Sie eignet sich besonders für Flachleitungen der eingangs erwähnten Art, kann aber auch für einen oder mehrere Einzelleiter verwendet werden, die, selbst mit oder ohne Isolierung versehen, separat voneinander in die Schutzumhüllung eingelegt werden.

Zudem kann die Schutzumhüllung zusammen mit der elektrischen Leitung raumsparend und flexibel verlegt werden, da erstere aufgrund ihrer Form und ihrer flexiblen Ausbildung um eine Querachse gebogen werden kann, die sich in Breitenrichtung der Schutzumhüllung erstreckt. Die Schulzumhüllung kann überdies zur Konfektionierung, d. h. zur Befüllung mit einer elektrischen Leitung einfach geöffnet und wieder verschlossen werden, so daß sich eine besonders einfache Handhabung bei der Herstellung von Kabelbäumen verwirklichen läßt. Hierzu ist lediglich die Schutzumhüllung an ihrem seitlichen Verschluß bzw. ihren Verschlüssen zu öffnen, die elektrische Leitung zwischen die Breitseiten der Schutzumhüllung einzulegen, und die Schutzumhüllung wieder zu verschließen. Zum Verschließen muß die Schutzumhüllung lediglich an ihren Breitseiten zusammengedrückt werden. Die Seitenwandabschnitte schnappen dann in einander ein, so daß der Verschluß nach seiner Verrastung selbsthaltend ist.

Die eingelegte elektrische Leitung wird nach dem Verschließen der Schutzumhüllung zwischen den Anlageflächen aufgenommen und damit automatisch in ihrer Position festgehalten. Insbesondere wird hierdurch vermieden, daß die elektrische Leitung in der Schutzumhüllung zu Schwingungen angeregt wird, infolge derer es zu einer Beschädigung von Einzelleitern und damit zu einem Ausfall der Fahrzeugelektrik kommen könnte. Vorzugsweise erfolgt das Halten unter Nutzung eines Klemmeffektes, der beispielsweise durch eine gezielte Maß- und Materialabstimmung der Anlageflächen mit der zu umhüllenden Leitung eingestellt wird.

in einer vorteilhaften Ausgestaltung der Erfindung ist der schlauchartige Körper wenigstens an seinen Breitseiten wellenartig profiliert, wobei die nach innen weisenden Kämme der Profilierung die Anlageflächen zum vorzugsweise klemmenden Halten der elektrischen Leitung bilden. Die Anlageflächen sind somit in die Außenwand der Schutzumhüllung integriert und einfach herstellbar. Die Ausbildung der Anlageflächen kann beispielsweise gleichzeitig mit der Formgebung des Profils der Schutzumhüllung vorgenommen werden.

In einer weiteren, vorteilhaften Ausgestaltung der Erfindung ist die wellenartige Profilierung in Längsrichtung des schlauchartigen Körpers angeordnet, derart, daß sich die Wellenkämme quer zur Längsrichtung erstrecken. Hierdurch läßt sich die Flexibilität der Schutzumhüllung weiter verbessern, so daß auch relativ enge Krümmungsradien in bezug auf eine Querrichtung des bandförmigen elektrischen Leiters verwirklicht werden können. Das Krümmungsverhalten läßt sich weiter verbessern, indem die Seitenwandabschnitte zusätzlich mit Kerben versehen werden, so daß eine höhere Nachgiebigkeit erzielt wird.

In einer weiteren, vorteilhaften Ausgestaltung der Erfindung liegt im geschlossenen bzw. zusammengebauten Zustand der Schutzumhüllung die Abschlußkante des innenliegenden Seitenwandabschnittes gegen die Innenwand der gegenüberliegenden Breitseite an. Der Seitenwandabschnitt übernimmt somit eine Abstützung zwischen den Breitseiten der Schutzumhüllung und verleiht der Profil-Schmalseite zusätzliche Festigkeit. Überdies wird hierdurch an dem Verschluß eine eindeutige Lagezuordnung des Seitenwandabschnittes zu der gegenüberliegenden Breitseite der Schutzumhüllung erreicht, wodurch ein richtiges Zusammenfügen der Seitenwandabschnitte des Verschlusses gewährleistet wird.

Für ein glattflächiges äußeres Erscheinungsbild ist es vorteilhaft, wenn im geschlossenen bzw. zusammengebauten Zustand die Abschlußkante des außenliegenden Seitenwandabschnittes glattflächig mit einem angrenzenden Wandabschnitt einer Breitseite abschließt. Damit können ein Verhaken und ein unbeabsichtigtes Öffnen des Verschlusses bei der Montage am Einbauort vermieden werden.

Vorzugsweise endet die Abschlußkante des innenliegenden Seitenwandabschnittes in Querrichtung bei Betrachtung in Richtung zur Außenseite hin vor der Abschlußkante des außenliegenden Seitenwandabschnittes. Dies ist besonders beim Schließen des Verschlusses vorteilhaft, um ein Verkanten der Seitenwandabschnitte auszuschließen.

In einer weiteren, vorteilhaften Ausgestaltung der Erfindung ist die Abschlußkante des innenliegenden Seitenwandabschnittes in Querrichtung des schlauchartigen Körpers angewinkelt, wobei der Anstellwinkel zu einer Querrichtung im Bereich von 15° bis 75°, vorzugsweise 30° bis 60° liegt. Der innenliegende Seitenwandabschnitt bzw. dessen Abschlußkante gleitet damit beim Verrasten des Klippverschlusses besonders leicht über das zugehörige Gegenstück in die Verrastposition.

Vorzugsweise weisen der innenliegende Seitenwandabschnitt und der außenliegende Seitenwandabschnitt jeweils eine im wesentlichen V-artige Profilform auf, die fertigungstechnisch einfach herstellbar ist, wenn das Profil der Schutzumhüllung beispielsweise durch Extrudieren hergestellt wird.

In einer vorteilhaften Weiterbildung der Erfindung ist die Spitze der V-artigen Profitform auf der Höhe der Lage der zwischen den Anlageflächen zu haltenden elektrischen Leitung angeordnet. Hierdurch kann die Formgebung zur Erzielung der formschlüssigen Verbindung der Seitenwandabschnitte gleichzeitig zur Positionierung der elektrischen Leitung innerhalb der Schutzumhüllung genutzt werden. Durch die Nutzung der Innenwand zur Abstutzung von Seitenrändern einer Flachleitung ergibt sich eine weitere Verbesserung der Sicherheit gegen schwingungsinduzierte Beschädigungen.

Vorzugsweise wird der Trennschnitt durch einen zu einer Halteebene der elektrischen Leitung geneigten Wandabschnitt geführt. Damit wird sichergestellt, daß nach dem Trennschnitt der innenliegende Seitenwandabschnitt mit seiner Abschlußkante innerhalb der Abschlußkante des außenliegenden Seitenwandabschnittes liegt, wodurch ein einfaches Zusammenfügen der Seitenwandabschnitte bzw. des Verschlusses sichergestellt ist. Eine weitere Bearbeitung der Schnittstelle ist hierbei nicht erforderlich.

Bevorzugt erfolgt die Formgebung der Außenkanten gleichzeitig mit dem Trennschnitt, beispielsweise durch die Verwendung eines konturierten Schneidwerkzeuges. Zur Erzielung einer geneigten Abschlußkante an dem innenliegenden Seitenwandabschnitt kann beispielsweise ein keilförmiges Messer verwendet werden, dessen eine Schneidkante der geneigten Außenkanten entsprechend ausgebildet ist, wohingegen die andere Schneidkante beispielsweise parallel zu der Führungsebene des bandförmigen elektrischen Leiters angeordnet werden kann, um die Außenkante des außenliegenden Seitenwandabschnittes zu formen.

In einer Ausführungsvariante der Erfindung ist an einer Schmalseite ein Verschluß, an der anderen Schmalseite hingegen eine gelenkige Verbindung vorgesehen. Die gelenkige Verbindung kann beispielsweise durch ein Filmschamier gebildet werden, wobei das gesamte Profil der Schutzumhüllung in einem Stück extrudiert wird. Damit ergibt sich eine aus zwei Hälften gebildete Konstruktion, bei der die beiden Hälften durch das Filmscharnier zusammengehalten werden. Das Filmscharnier übernimmt dabei eine Vorpositionierung der beiden Hälften zueinander, die zum Einschluß einer elektrischen Leitung lediglich zusammengeklappt und an ihren dem Verschluß zugehörigen Seitenwandabschnitten verbunden werden müssen.

In einer alternativen Ausführungsvariante ist an beiden Schmalseiten jeweils ein Verschluß vorgesehen, wobei die Schutzumhüllung wiederum aus zwei Hälften besteht. Die beiden Hälften lassen sich dabei aus einem rechteckartigen Schlauchkörper mit geschlossenem Profil herstellen, der sich besonders günstig extrudieren läßt. Das geschlossene Profil wird durch Längsschlitzen im Bereich der einander gegenüberliegenden Schmalseiten in etwa halbiert, woraufhin dann die beiden Hälften unter Verrastung der Seitenwandabschnitte ineinander verschoben werden.

Eine besonders einfache Konstruktion ergibt sich bei einer symmetrischen Ausbildung des Querschnittsprofils der Schutzumhüllung bezüglich einer die Breitseiten schneidenden Mittelebene.

In einer weiteren vorteilhaften Ausgestaltung sind die einander gegenüberliegenden Breitseiten jeweils in den Innenraum des schlauchartigen Körpers gerichtet konvex ausgebildet Die konvexen Innenwände der Breitseiten bilden dabei die Anlageflächen für die zu schützende Leitung. Hierdurch ergibt sich eine besonders einfache Gestalt der Schutzumhüllung, die überdies den Vorteil eines automatischen Dickenausgleiches für die zu haltende Leitung bzw. Leitungen aufweist. Damit kann dieselbe Schutzumhüllung für ein sicheres Halten von Leitungen unterschiedlicher Dicke bzw. von Leitungsstapeln mit variierender Leitungsanzahl eingesetzt werden.

Vorzugsweise sind weiterhin die Seitenwandabschnitte konkav ausgebildet. Bei einem Verschließen der Schutzumhüllung verrasten die Seitenwandabschnitte aufgrund ihrer Krümmung miteinander, so daß der Verschluß nicht ohne Überwindung eines Widerstandes gelöst werden kann. Trotzdem weist der Verschluß eine geringfügige Beweglichkeit zwischen den nach außen gekrümmten Sertenwandabschnitten auf, die die Anpassung an unterschiedlich dicke Leitungen begünstigt. Überdies ist der Verschluß einfach aus einem Rohr mit einem kreisringförmigen Querschnitt herstellbar, indem dieses von zwei einander gegenüberliegenden Seiten annähernd kastenförmig flachgedrückt und an mindestens einer Schmalseite geschlitzt wird.

Dementsprechend läßt sich der Herstellungsaufwand für die Schutzumhüllung dann besonders gering halten, wenn die Seitenwandabschnitte aus einem ursprünglich verbundenen Wandabschnitt gebildet sind, der mit einem Längsschnitt durchtrennt worden ist.

Nach einer besonderen Ausgestaltung der Erfindung sind die Breitseiten der Schutzumhüllung als zwei gegeneinander verschwenkbare Schenkel zur beidseitigen Anlage gegen die elektrische Leitung ausgebildet, wobei die Schenkel einen sich In Längsriçhtung der Schutzumhüllung erstreckenden Verschluß aufweisen und diesem gegenüberliegend über ein elastisch verformbares Gelenk einstückig miteinander verbunden sind, das in einer Offenstellung, in welcher die elektrische Leitung zwischen die Schenkel einlegbar ist, eine unverformte Stellung einnimmt.

Da das elastisch verformbare Gelenk seinen unverformten Zustand in der Offenstellung der Schutzumhüllung einnimmt, können elektrische Leitungen in diese eingelegt oder aus dieser herausgenommen werden, ohne daß hierzu besondere Maßnahmen zum Aufhalten der Schutzumhüllung erforderlich wären.

Bevorzugt wird die Schutzumhüllung für eine Erstbestückung in der Offenstellung bereitgestellt. In diesem Fall sind lediglich die elektrischen Leitungen einzulegen und die Schutzumhüllung durch Zusammendrücken der Schenkel zu schließen, bis der Verschluß einrastet. Die eingelegten elektrischen Leitungen werden dann zwischen den Schenkeln in ihrer Position gehalten und können nicht verrutschen. Da das Einlegen weitestgehend unbehindert erfolgt, kann sichergestellt werden, daß die eingelegte Leitung oder die eingelegten Leitungen sich nach dem Schließen in einer gewünschten Lage befinden.

Wird die Schutzumhüllung im geschlossenen Zustand bereitgestellt, so kann diese nach dem Öffnen des Verschlusses aufgeklappt werden. Die Schutzumhüllung verharrt dann in einer Offenstellung, in der in der vorstehend erläuterten Art und Weise eine Bestückung vorgenommen werden kann. Die Elastizität des Gelenkes unterstützt das Erreichen einer weiten Spreizung der Schenkel oder bringt diese selbsttätig in die Offenstellung, in der sich das Gelenk im entspannten Zustand befindet.

Vorzugsweise ist an dem Seitenwandabschnitt eine innenliegende Haltefläche vorgesehen, die im verrasteten Zustand gegen eine außenliegende Haltefläche an dem anderen Schenkel oder dem an diesem angeformten Seitenwandabschnitt anliegt, wobei die beiden Halteflächen im verrasteten Zustand In einer Ebene liegen, die annähernd parallel zu einer Erstreckungsebene der elektrischen Leitung zwischen unmittelbar benachbarten Anlageflächen ist. Damit läßt sich eine zuverlässige Schließwirkung erzielen, die gegen ein versehentliches Öffnen sicher ist. Weiterhin dichten die gegeneinander verspannten Halteflächen den Innenraum der Schutzumhüllung gegen das Eindringen von Schmutzpartikeln oder Feuchtigkeit wirksam ab.

Die Handhabung der Schutzumhüllung läßt sich in einer bevorzugten Ausgestaltungsform dadurch weiter verbessern, daß an eines der Verschlußtelle ein Gleitflächenabschnitt angeformt ist, welcher bei einer ersten Anlage der Verschlußteile derart geneigt ist, daß bei einer Weiterführung der Schließbewegung das andere Verschlußteil an dem Gleitflächenabschnitt geführt wird, um einen Rastvorsprung zu überwinden. Hierdurch wird der Widerstand beim Schließen der Schutzumhüllung vermindert. Der umgreifende Seitenwandabschnitt bzw. dessen Abschlußkante gelangt beim Verrasten des Verschlusses besonders leicht über einen an dem zugehörigen Gegenstück ausgebildeten Vorsprung in eine Verrastposition.

Die oben genannte Aufgabe wird weiterhin gelöst durch ein Verfahren zur Herstellung einer Schutzumhüllung für elektrische Leitungen, vorzugsweise für elektrische Flachleitungen, bei dem zunächst ein schlauchartiger Körper mit einem in Umfangsrichtung geschlossenen Profil gefertigt wird, wobei der schlauchartige Körper zwei winklig miteinander verbundene Schenkel aufweist und durch einen weiteren Wandabschnitt in Umfangsrichtung geschlossen ist, und bei dem hernach der Wandabschnitt herausgetrennt wird. Damit läßt sich. eine Schutzumhüllung mit den vorstehend bereits erläuterten Vorteilen besonders einfach und kostengünstig herstellen. Nach dem Heraustrennen des Wandabschnittes steht diese unmittelbar im Erstverwendungszustand zur Verfügung. Der herausgetrennte Wandabschnitt kann beispielsweise regranuliert und dessen Material wiederverwendet werden.

Vorzugsweise erfolgt das Heraustrennen des Wandabschnittes durch zwei parallele Schnitte, so daß der Aufwand zum Heraustrennen des Wandabschnittes gering bleibt. Es ist dann auch möglich, den Wandabschnitt als eigenständiges, weiterverwendbares Bauteil oder als ein Vorstück eines solchen auszubilden.

In einer vorteilhaften Ausgestaltung des Verfahrens wird mit dem Heraustrennen des Wandabschnittes die Ausbildung eines verrastbaren Verschlusses an den Schenkeln vorgenommen, so daß zu dessen Ausbildung keine weiteren Fertigungsschritte notwendig sind. Die Teile des Verschlusses lassen sich hernach ohne weitere Bearbeitungsmaßnahmen miteinander verrasten.

Eine besonders effiziente Herstellung von Schutzumhüllungen mit einem gewellten Profil ergibt sich vorzugsweise dadurch, daß der schlauchartige Körper bereits vor dem Heraustrennen des Wandabschnittes mit einer wellenartigen Profilierung versehenen wird.

Für die vorstehend beschriebenen Schutzumhüllungen kommen vor allem Kunststoffe in Frage. Bevorzugt wird die Schutzumhüllung aus einem thermoplatischen Material hergestellt. Dieses Material bietet neben einer kostengünstigen Herstellung eine hohe Gestaltungsfreiheit hinsichtlich der Form der Schutzumhüllung, die besonders einfach extrudiert werden kann. Zudem wird eine hohe Sicherheit gegen Beschädigungen des bandförmigen elektrischen Leiters gewährleistet, wobei das Material überdies eine hinreichende Flexibilität bereitstellt, die auch verhältnismäßig enge Krümmungsradien bei einem Biegen um eine in Breitenrichtung verlaufende Querachse zuläßt. Die materialbedingte Elastizität unterstützt weiterhin ein klemmendes Halten der elektrischen Leitung, die auf diese Weise besonders gegen Vibrationen geschützt wird.

Die Erfindung wird nachfolgend beispielhaft anhand von in den Zeichnungen dargestellten Ausführungsbeispielen näher erläutert. Die Zeichnungen zeigen in
- Figur 1: eine Querschnittsansicht eines ersten Ausführungsbeispiels einer Schutzumhötlung im zusammengebauten Zustand mit einer elektrischen Leitung, die hier als Folienleitung ausgebildet ist;
- Figur 2: eine Querschnittsansicht eines schlauchartigen Körpers mit geschlossenem Profil als Vorstück einer Schutzumhüllung nach dem ersten Ausführungsbeispiel;
- Figur 3: eine Ansicht einer profilierten Breitseite des schlauchartigen Körpers von außen mit einem Längsschnitt durch eine wellenartige Profilierung;
- Figur 4: einen Schnitt entlang der Linie A-A in Figur 3, d. h. eine Querschnittsansicht im Bereich einer nutförmigen Einwölbungen des schlauchartigen Körpers des ersten Ausführungsbeispiels;
- Figur 5: eine Querschnittsansicht der Schutzumhüllung von Figur 1 im nicht-zusammengebauten Zustand, zur Veranschaulichung der Formgebung von Abschlußkanten an Seitenwandabschnitten im Bereich von Schmalseiten der Querschnittsform;
- Figur 6: eine Querschnittsansicht eines zweiten Ausführungsbeispiels einer Schutzumhüllung im zusammengebauten Zustand mit einer elektrischen Flachleitung;
- Figur 7: eine Querschnittsansicht eines weiteren Ausführungsbeispiels einer Schutzumhüllung im geschlossenen Zustand mit einer elektrischen Leitung, die hier als Folienleitung ausgebildet ist,
- Figur 8: eine Querschnittsansicht eines schlauchartigen Körpers mit geschlossenem Profil als Vorstück einer Schutzumhüllung nach Figur 7,
- Figur 9: eine Seitenansicht von außen auf einen profilierten Schenkel der Schutzumhüllung nach Figur 7,
- Figur 10: einen Schnitt entlang der Linie C-C in Figur 8 zur Veranschaulichung der Profilierung eines Schenkels,
- Figur 11: eine weitere Querschnittsansicht durch jeweils einen nach innen ragenden Wellenkamm der Schenkel,
- Figur 12: eine Querschnittsansicht entsprechend Figur 8 mit einem gerade aus dem Vorstück herausgetrennten Wandabschnitt, wobei der verbleibende Rest die Schutzumhüllung nach Figur 7 in ihrer Offenstellung bildet,
- Figur 13: eine Querschnittsansicht eines letzten Ausführungsbeispiels einer Schutzumhüllung im geschlossenen Zustand,
- Figur 14: eine Querschnittsansicht eines Vorstückes der Schutzumhüllung nach Figur 13,
- Figur 15: eine Seitenansicht von außen auf einen profilierten Schenkel der Schutzumhüllung nach Figur 13,
- Figur 16: einen Schnitt entlang der Linie C-C in Figur 14 zur Veranschaulichung der Profilierung eines Schenkels,
- Figur 17: eine weitere Querschnittsansicht durch jeweils einen nach innen ragenden Wellenkamm der Schenkel, und in
- Figur 18: eine Querschnittsansicht entsprechend Figur 14 mit einem gerade aus dem Vorstück herausgetrennten Wandabschnitt, wobei der verbleibende Rest die Schutzumhüllung nach Figur 13 in ihrer Offenstellung bildet.

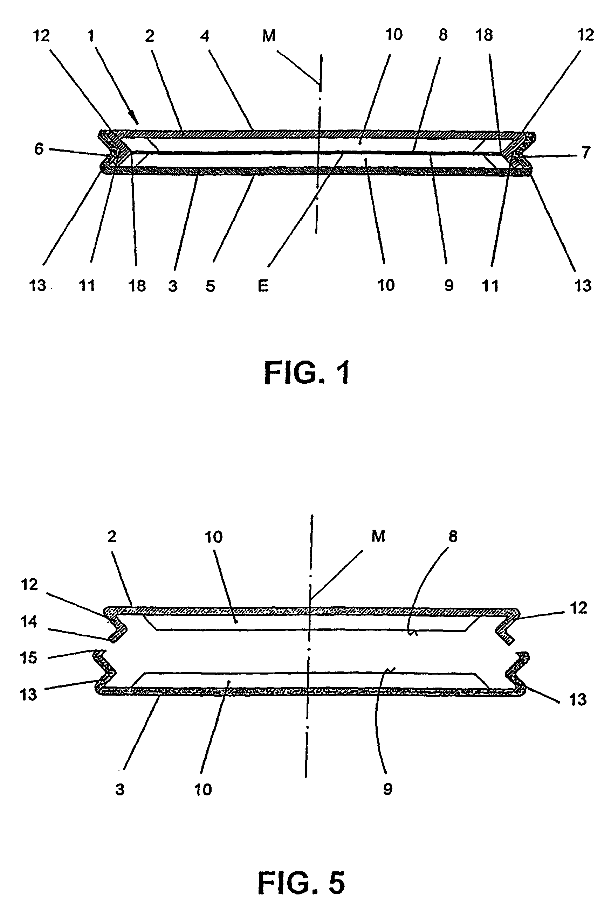

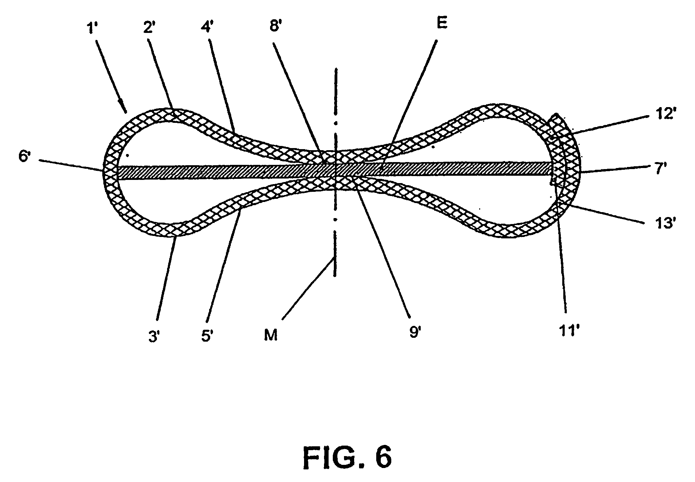

Das erste Ausführungsbeispiel zeigt in Figur 1 eine Schutzumhüllung 1 im geschlossenen bzw. zusammengebauten Zustand, in die eine flächenhafte, bandförmige elektrische Leitung E eingelegt ist. Die Schutzumhüllung 1 weist hierzu einen schlauchartigen Körper mit einem im wesentlichen rechteckigen Querschnittsprofil auf, der in Längsrichtung in zwei Hälften 2 bzw. 3 geteilt ist. Dabei ist die eine Hälfte 2 in die andere Hälfte 3 eingesetzt, so daß ein annähernd kastenförmiger Körper gebildet wird. In Figur 5 ist die Schutzumhüllung 1 in einem geöffneten Zustand dargestellt, in dem die beiden Hälften 2 bzw. 3 auseinandergezogen sind, so daß die elektrische Leitung E in einen zwischen den Hälften 2 bzw. 3 gebildeten Innenraum eingesetzt werden kann. Anstelle einer einstückigen elektrischen Leitung E können selbstverständlich auch mehrere separate Leitungen nebeneinander oder übereinandergestapelt in die Schutzumhüllung eingelegt werden.

Wie aus den Figuren 1 bzw. 5 zu erkennen ist, weist das rechteckartige Profil des schlauchartigen Körpers zwei einander gegenüberliegende Breitseiten 4 bzw. 5 auf, die parallel zueinander sowie zu einer Lageebene der elektrischen Leitung E angeordnet sind. Die Trennung des rechteckartigen Profils in zwei Hälften 2 bzw. 3 erfolgt an Schmalseiten 6 bzw. 7 desselben.

Der schlauchartige Körper ist an den Breitseiten 4 bzw. 5 seiner Innenwand mit Anlageflächen 8 bzw. 9 versehen, die im zusammengebauten Zustand gegen eine in der Schutzumhüllung 1 anzuordnende Leitung E anliegen, um diese zu halten. Vorzugsweise wird die Leitung E nach dem Verschließen der Schutzumhüllung zwischen den Anlageflächen automatisch eingeklemmt. Die Anlageflächen 8 bzw. 9 sind an hierzu in den Innenraum der Schutzumhüllung 1 hineinragenden Vorsprüngen angeordnet, um die elektrische Leitung E von beiden Seiten mittig in der Schutzumhüllung 1 zu zentrieren. Wie insbesondere aus Figur 1 zu erkennen ist, erstrecken sich die Anlageflächen 8 bzw. 9 im wesentlichen über die gesamte Breite des schlauchartigen Körpers, um die elektrische Leitung über eine möglichst große Breit zu halten bzw. einzuklemmen. Neben der Möglichkeit, die Anlageflächen 8 bzw. 9 beidseitig der Leitung E an Vorsprüngen auszubilden, sind auch Anordnungen möglich, bei denen lediglich die Anlageflächen einer der Hälften der Schutzumhüllung an Vorsprünge vorgesehen sind, wohingegen an der anderen Hälfte ein nichtvorgeformter Innenwandbereich als Anlagefläche dient.

Weiterhin ist aus den Figuren 1 bzw. 5 zu erkennen, daß der schlauchartige Körper eine im wesentlichen konstante Wanddicke aufweist, wobei im Bereich der Schmalseiten 6 bzw. 7 eine Wandverdopplung vorliegt. Die mit den Anlageflächen 8 bzw. 9 versehenen Vorsprünge werden in Wandabschnitten der Breitseiten 4 bzw. 5 ausgeprägt. Dazu ist der schlauchartige Körper an seinen Breitseiten 4 bzw. 5 wellenartig profiliert, wobei die nach innen weisenden Kämme der Profilierung die Anlageflächen 8 bzw. 9 zum Halten der elektrischen Leitung E bilden.

Prinzipiell ist es möglich, zum Zweck des Haltens oder Klemmens der elektrischen Leitung E die wellenartige Profilierung in Längsrichtung des schlauchartigen Körpers oder auch in Breitenrichtung desselben auszubilden. Letzteres ist besonders dann zu bevorzugen, wenn eine relativ hohe Biegesteifigkeit gewünscht wird. In dem dargestellten Ausführungsbeispiel ist die wellenartige Profilierung jedoch in Längsrichtung des schlauchartigen Körpers angeordnet, wobei sich die Wellenkämme quer zur Längsrichtung erstrecken. Hierdurch wird das Biegeverhalten unterstützt, so daß die Schutzumhüllung 1 mit der elektrischen Leitung E flexibel verfegt werden kann. Die wellenartige Profilierung in Längsrichtung erlaubt es, die Schutzumhüllung 1 auch mit verhältnismäßig kleinen Krümmungsradien um eine Achse in Breitenrichtung zu Biegen. Hierbei sind Krümmungsradien möglich, die mit glattwandigen, nicht-profilierten Schutzumhüllungen nicht mehr realisiert werden können. Zur Erzielung einer besonders hohen Nachgiebigkeit können weiterhin an den Schmalseiten, d.h. den Seitenwandabschnitten 12 bzw. 13 Kerben vorgesehen werden.

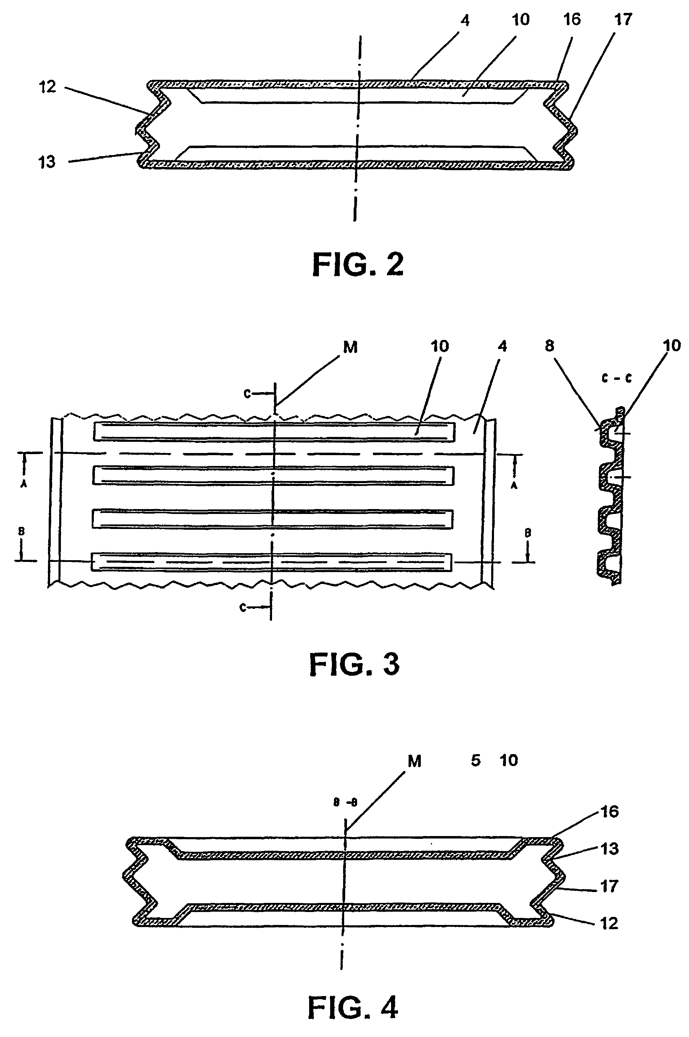

Die wellenartige Profilierung in dem Ausführungsbeispiel erfolgt solchermaßen, daß die außenliegenden, abgeplatten Wellenkämme jeweils mit der Außenwand der Breitseiten 4 bzw. 5 glattflächig abschließen, wie dies in den Figuren 2 bzw. 4 gezeigt ist. Hierzu sind die Vorsprünge mit den Anlageflächen 8 bzw. 9 als nutförmige Einwölbungen 10 von Wandabschnitten der Breitseiten 4 bzw. 5 ausgebildet, wobei die Einwölbungen 10 zur Innenseite der Schutzumhüllung hin die innenliegenden Wellenkämme der Profilierung aufweisen, die hier ebenfalls abgeplattet sind. Die Einwölbungen 10 erstrecken sich dabei jeweils im wesentlichen über die gesamte Weite der Breitseiten 4 bzw. 5. Dadurch kann vermieden werden, daß bei engeren Krümmungsradien Beschädigungen an den Breitseiten 4 bzw. 5 auftreten. Wie insbesondere aus den Figuren 2 und 4 weiter zu erkennen ist, laufen die Einwölbungen 10 in Breitenrichtung jeweils flach geneigt zu einer Außenoberfläche der jeweiligen Breitseite 4 bzw. 5 hin aus, ohne daß diese die Schmalseiten 6 bzw. 7 erreichen. Damit ergibt sich für die Schutzumhüllung 1 eine insbesondere an den Ecken des Querschnittsprofils glatte Ausbildung, so daß bei der Montage der Schutzumhüllung an einem Einbauort ein Verhaken mit dort befindlichen Vorsprüngen vermieden wird.

Weiterhin wird hierdurch eine freie Gestaltung der Verbindung der Hälften 2 bzw. 3 der Schutzumhüllung 1 im Bereich der Schmalseiten 6 bzw. 7 ermöglicht, die im folgenden nun näher erläutert wird.

In dem Ausführungsbeispiel ist eine Möglichkeit zur Verbindung der Hälften 2 bzw. 3 gezeigt. Dazu sind an den Schmalseiten 6 bzw. 7 des Querschnittsprofils Klippverschlüsse 11 vorgesehen, die sich durchgehend in Längsrichtung des schlauchartigen Körpers erstrecken. Jeder dieser Verschlüsse 11 wird durch zwei Seitenwandabschnitte und 12 bzw. 13 gebildet, die jeweils einstückig an einem Wandabschnitt einer Breitseite 4 bzw. 5 angeformt sind und lösbar miteinander verrastet werden können. Dabei kommt der weiter innenliegende Seitenwandabschnitt 12, der an einer Hälfte 2 der Schutzumhüllung 1 ausgebildet ist, mit seiner Außenwand gegen eine Innenwand des weiter außenliegenden Seitenwandabschnittes 13, der an der gegenüberliegenden Hälfte 3 ausgebildet ist, in Anlage. Die Seitenwandabschnitte 12 bzw. 13 sind hierbei profiliert ausgebildet, um ein formschlüssiges Verrasten miteinander zu ermöglichen. Dazu entspricht die Außenkontur des innenliegenden Seitenwandabschnittes 12 der Innenkontur des außenliegenden Seitenwandabschnittes 13. In dem Ausführungsbeispiel wird dies durch eine im wesentlichen V-artige Profilform der Seitenwandabschnitte 12 bzw. 13 erreicht, wobei die Spitzen der V-Form in Breitenrichtung weisen.

Die Profilierung des innenliegenden Seitenwandabschnittes 12 kann zusätzlich als Positionierhilfe und zur Lagefestlegung einer elektrischen Flachleitung E beim Einlegen in die Schutzumhüllung 1 verwendet werden. Hierzu ist es besonders vorteilhaft, wenn die Spitze 18 der V-Form auf der Höhe der Lageebene der Flachleitung E angeordnet wird.

Wie insbesondere aus Figur 1 zu erkennen ist, kommt im zusammengebauten Zustand der Schutzumhüllung eine Abschlußkante 14 des innenliegenden Seitenwandabschnittes 12 gegen die Innenwand der gegenüberliegenden Breitseite 5 zur Anlage, wodurch eine definierte Lagezuordnung der beiden Hälften 2 bzw. 3 der Schutzumhüllung 1 ermöglicht wird.

Der außenliegende Seitenwandabschnitt 13 weist ebenfalls eine sich in Längsrichtung des schlauchartigen Körpers erstreckende Außenkante 15 auf, die hier glattflächig mit einem angrenzenden Wandabschnitt der gegenüberliegenden Breitseite 4 abschließt.

Die Abschlußkante 14 des innenliegenden Seitenwandabschnittes 12 ist in Querrichtung des schlauchartigen Körpers angewinkelt, um ein einfacheres Zusammensetzen der beiden Hälften 2 bzw. 3 zu ermöglichen. Die Neigung der Abschlußkante 14 ist dabei solchermaßen gewählt, daß diese bei einem Auftreffen auf die Abschlußkante 15 des außenliegenden Seitenwandabschnittes 13 und zur Innenseite der Schutzumhüllung 1 hin abgelenkt wird. Überdies unterstützt die Neigung der Abschlußkante 14 das Gleiten entlang des außenliegenden Seitenwandabschnittes 13, so daß der Widerstand beim Zusammendrücken des Verschlusses 11 bzw. der beiden Hälften 2 bzw. 3 gering gehalten wird. Der Anstellwinkel zur Quer- bzw. Breitenrichtung des Querschnittsprofils liegt im Bereich von 15° bis 75°. Zur Verringerung der Verletzungsgefahr werden Winkel im Bereich von 30° bis 60° bevorzugt. Die Neigung der Abschlußkante 14 erlaubt überdies die Anordnung derselben in einer Innenwandkehle der gegenüberliegenden Hälfte 3.

Zur weiteren Erleichterung des Zusammenfügen endet die Abschlußkante 14 des innenliegenden Seitenabschnittes 12 in Querrichtung bei Betrachtung in Richtung zur Außenseite hin vor der Abschlußkante 15 des außenliegenden Seitenabschnittes 13. Bei einem lagerichtigen Zusammensetzen der beiden Hälften 2 bzw. 3 können somit die Abschlußkanten 14 und 15 berührungsfrei aneinander vorbeigeführt werden. Im Falle eines Versatzes erfolgt durch die Neigung der Abschlußkanten 14 eine Lagekorrektur beim Zusammenfügen.

Die Schutzumhüllung 1 wird aus einem in den Figuren 2 bis 4 dargestellten Vorstück 16 hergestellt. Das Vorstück 16 selbst ist dabei als schlauchartiger Körper mit geschlossener Profilkontur ausgebildet. Dabei sind die späteren Seitenwandabschnitte 12 bzw. 13 im Bereich ihrer Abschlußkante 14 bzw. 15 miteinander verbunden. Zur Ermöglichung des Einlegens einer elektrischen Leitung E wird das Vorstück 16 an seinen Schmalseiten 6 bzw. 7 in Längsrichtung aufgeschnitten. Der Trennschnitt wird dabei durch einen zur späteren Halteebene des Leitung E geneigten Wandabschnitt 17 geführt, wobei mit dem Trennschnitt gleichzeitig die Formgebung der Außenkanten 14 bzw. 15 erfolgt. Hierzu wird bevorzugt ein Schneidwerkzeug mit keilförmig zueinander angeordneten Schneidkanten verwendet, so daß sich die Winkel an den Außenkanten 14 bzw. 15 individuell einstellen lassen.

Im Zusammenhang mit dem ersten Ausführungsbeispiel wurde bisher eine Schutzumhüllung 1 beschrieben, bei der die beiden Hälften 2 bzw. 3 vollständig voneinander getrennt sind, so daß an beiden Schmalseiten 6 bzw. 7 Klippverschlüsse 11 vorgesehen werden. In einer Variante des Ausführungsbeispiels ist lediglich an einer der Schmalseiten 6 bzw. 7 ein Verschluß 11 vorgesehen. Die gegenüberliegende Schmalseite 7 bzw. 6 weist hingegen eine gelenkige Verbindung auf, die beispielsweise als Filmschamier ausgebildet werden kann, so daß die beiden Hälften 2 bzw. 3 stets miteinander verbunden bleiben. Anstelle eines mehr oder weniger geraden Zusammensteckens der beiden Hälften 2 bzw. 3 werden diese um das Filmschamier geschwenkt, d. h. zusammengeklappt. Das Filmschamier übernimmt dabei eine Vorpositionierung der beiden Hälften 2 bzw. 3 zueinander, wodurch sich eine besonders einfache manuelle Handhabung verwirklichen läßt.

Weiterhin zeigt das erste Ausführungsbeispiel eine symmetrische Ausbildung der Schutzumhüllung mit Bezug auf eine In Längsrichtung verlaufende Mittelebene M. Diese Ausführungsform besitzt konstruktionstechnische Vorteile. Jedoch kann das Querschnittsprofil der Schutzumhüllung auch asymmetrisch ausgebildet werden, sofern beispielsweise die Einbaubedingungen dies erforderlich machen.

Der gesamte schlauchartige Körper ist aus einem extrudierbaren Kunststoff hergestellt, so daß das Vorstück 16 als Endlosmaterial gefertigt werden kann. Von diesem können für die Schutzumhüllung 1 benötigte Stücke in beliebiger Länge abgetrennt werden. Als Kunststoffmaterial hat sich hier vor allem Polyamid als besonders vorteilhaft erwiesen.

Im folgenden wird nun ein zweites Ausführungsbeispiel einer Schutzumhüllung beschrieben, das in Figur 6 dargestellt ist. Auch diese Schutzumhüllung 1' weist einen schlauchartigen Körper mit einem annähernd kastenartigen Querschnitt auf, dessen Breitseiten 4' bzw. 5' eine größere räumliche Ausdehnung besitzen, als dessen Schmalseiten 6' bzw. 7'.

Die einander gegenüberliegenden Breitseiten 4' bzw. 5' sind jeweils nach innen gewölbt und bilden somit konvexe Innenwände, die als Anlageflächen 8' bzw. 9' für eine oder mehrere, gestapelte elektrische Leitungen E dienen. Die Schmalseiten 6' bzw. 7' besitzen demgegenüber jeweils eine nach außen gewölbte Gestalt, die in etwa einem Kreisringabschnitt enispricht. Insgesamt ergibt sich damit eine in etwa hantelartige Form.

Wie aus Figur 6 zu erkennen ist, weist die Schutzumhüllung an einer Schmalseite 7' einen sich in Längsrichtung des schlauchartigen Körpers erstreckenden Verschluß 11' auf, der durch einander überlappende, miteinander verrastete Seitenwandabschnitte 12' bzw. 13' gebildet wird. Die gegenüberliegende Schmalseite 6' ist hier als durchgehende Wand ausgebildet. Es ist jedoch möglich, diese ebenfalls mit einem Verschluß aus überlappenden Seitenwandabschnitten auszubilden.

Durch die Krümmung der Seitenwandabschnitte 12' bzw. 13' ergibt sich zwischen diesen ein Formschluß, so daß der Verschluß in seiner Schließstellung selbsthaltend ist. Die Schließwirkung wird weiterhin durch eine in der Schließstellung vorherrschende Vorspannung unterstützt, indem der innenliegende Seitenwandabschnitt 12' gegen den außenliegenden Seitenwandabschnitt 13' drückt. Zu diesem Zweck ist der schlauchartige Körper aus einem formstabilen, elastischen Material, beispielsweise Polyamid, hergestellt.

Anstelle des in Figur 6 dargestellten Verschlusses 11' kann jedoch auch eine anders gestaltete, in Umgangsrichtung formschlüssige Verbindung vorgesehen werden, beispielsweise ein Verschluß 11 entsprechend dem ersten Ausführungsbeispiel.

Der Verschluß 11' ist in dem Ausführungsbeispiel lösbar ausgebildet. Es ist jedoch auch möglich, diesen nach dem Einlegen einer Leitung E zu versiegeln, z.B. durch ein Verschweißen oder Verkleben.

Wird zwischen die Anlageflächen 8' und 9', die in Leerstellung der Schutzumhüllung gegeneinander anliegen können, eine elektrische Flachleitung E eingelegt und nachfolgend die Schutzumhüllung geschlossen, so kommen die Anlageflächen 8' und 9' gegen die Leitung E elastisch zur Anlage, so daß diese in der Mitte zwischen den Schmalseiten 6' und 7' klemmend gehalten wird. Dabei werden die Anlageflächen 8' und 9' bzw. die konvexen Innenwände leicht nach außen verformt, womit eine geringfügige Vorspannung in der Schließstellung erfolgt. Durch die auf die Mitte zwischen den Schmalseiten beschränkte Anlage gegen die Leitung E weisen die Anlageflächen 8' und 9' ein größeres Verformungsvermögen auf, als die sich im wesentlichen über die gesamte Breite erstreckenden Einwölbungen 10 des ersten Ausführungsbeispiels. Es ist daher möglich, dieselbe Schutzumhüllung für Leitungen E unterschiedlicher Dicke oder für gestapelte Leitungen mit unterschiedlicher Leitungsanzahl zu verwenden.

Zur Verminderung des Schwingens der nicht von den Anlageflächen 8' und 9' erfaßten Abschnitte der Leitung E ist es möglich, die Breite des schlauchartigen Körpers auf die der Flachleitung E solchermaßen abzustimmen, daß die Flachleitung E mit ihren seitlichen Rändern jeweils gegen einen Innenwandabschnitt im Bereich der Schmalseiten 6' bzw. 7' anliegt, sich somit für die Leitung E eine Vierpunktanlage an das Innenwandquerschnittsprofil des schlauchartigen Körpers ergibt.

Der schlauchartige Körper mit dem in Figur 6 dargestellten Querschnitt läßt sich beispielsweise aus einem Schlauch oder Rohr mit kreisringförmigem Querschnitt herstellen. Dieser bzw. dieses wird an zwei gegenüberliegenden Seiten in einem thermischen Bearbeitungsvorgang entlang seiner Längserstreckungsrichtung eingewölbt, so daß die Verformung dauerhaft erhalten bleibt. Die eingewölbten Seiten bilden dann die Breitseiten 4' bzw. 5' des schlauchartigen Körpers. Zur Bildung des Verschlusses 11' wird der schlauchartige Körper dann im Bereich wenigstens einer Schmalseite 7' geschlitzt, so daß zwei getrennte Seitenwandabschnitte 12' und 13' entstehen, die zum Verschließen hintereinander verschoben werden können. Es ist jedoch auch möglich, das in Figur 6 dargestellte Profil von einer anderen Ursprungsform ausgehend herzustellen, beispielsweise einem schlauchartigen Hohlkörper mit einem ovalförmigen Querschnitt.

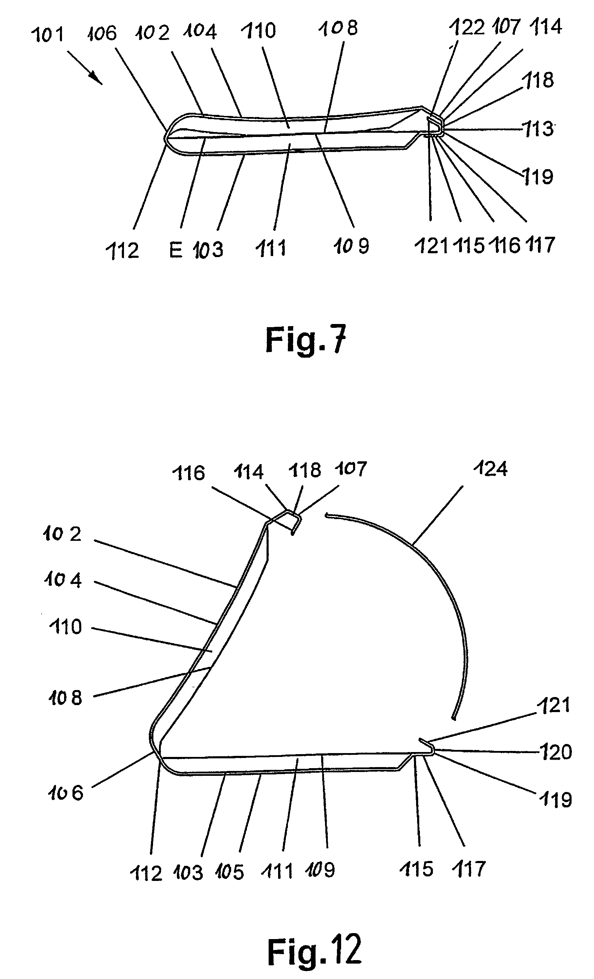

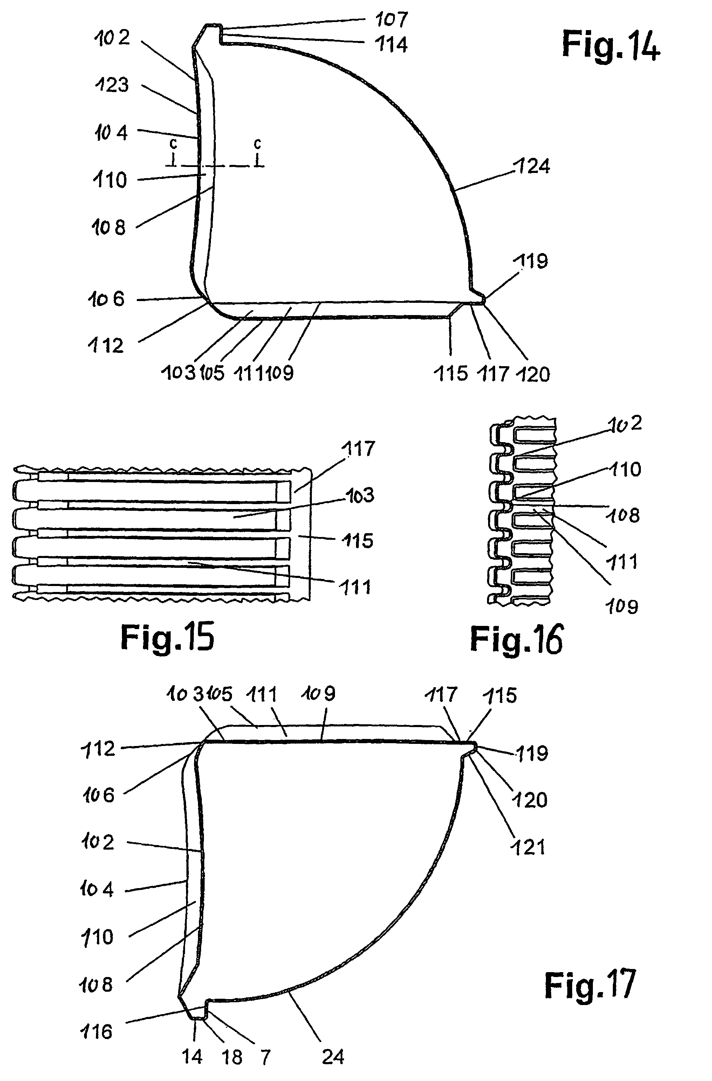

Das in den Figuren 7 bis 12 gezeigte Ausführungsbeispiel zeigt eine Schutzumhüllung 101 mit zwei zueinander verschwenkbaren Schenkeln 102 und 103, die einstückig miteinander verbunden sind. Figur 12 zeigt die Schutzumhüllung 101 in ihrer zur Bestückung geöffneten Stellung, in der die Verbindung der Schenkel 102 und 103 entspannt ist Die Schenkel 102 und 103 sind hierbei auseinandergespreizt. Figur 7 hingegen zeigt die Schutzumhüllung 101 im geschlossenen Zustand, in die hier bereits eine bandförmige elektrische Leitung E eingelegt ist. Die Schenkel 102 und 103 sind dazu zusammengeklappt und fixieren die elektrische Leitung E in ihrer Lage.

Anstelle einer einzigen, gegebenenfalls mehrere Einzelleiter aufweisenden elektrischen Leitung E können auch mehrere separate Leitungen nebeneinanderliegend oder übereinandergestapelt in der Schutzumhüllung 101 aufgenommen werden.

Wie aus Figur 7 zu erkennen ist, weist die Schutzumhüllung 101 in ihrer geschlossenen Stellung ein kastenartiges Querschnittsprofil auf. Die Schenkel 102 und 103 bilden in der geschlossenen Stellung zwei einander gegenüberliegende Breitseiten 104 und 105 des kastenartigen Profils, die im wesentlichen parallel zueinander sowie zu einer Haupterstreckungsebene der elektrischen Leitung E verlaufen. Die beiden Breitseiten 104 und 105 des Profils sind an ihren Enden jeweils über eine Schmalseite 106 bzw. 107 miteinander verbunden.

Die Schutzumhüllung 101 bildet an den Innenwänden der Schenkel 102 und 103 jeweils Anlageflächen 108 bzw. 109 aus, die im geschlossenen Zustand gegen eine in der Schutzumhüllung 101 anzuordnende Leitung E anliegen, um diese zu halten. Vorzugsweise wird die Leitung E nach dem Schließen der Schutzumhüllung 101 zwischen den Anlageflächen 108 bzw. 109 automatisch eingeklemmt. Die Anlageflächen 108 bzw. 109 sind hierzu an in den Innenraum der Schutzumhüllung 101 hineinragenden Vorsprüngen vorgesehen, um die elektrische Leitung E mittig in der Schutzumhüllung 101 zu zentrieren. Wie insbesondere aus Figur 7 zu erkennen ist, erstrecken sich die Anlageflächen 108 bzw. 109 im wesentlichen über die gesamte Breite der Schutzumhüllung 101, um die elektrische Leitung E über eine möglichst große Breite zu halten bzw. einzuklemmen. Neben der Möglichkeit, die Anlageflächen 108 bzw. 109 beidseits der Leitung E an Vorsprüngen auszubilden, sind auch Anordnungen möglich, bei denen lediglich die Anlageflächen einer der Schenkel 102 bzw. 103 an Vorsprüngen vorgesehen sind, wohingegen an dem anderen Schenkel ein nichtvorgeforniter Innenwandabschnitt als Anlagefläche dient.

Die Schutzumhüllung 101 weist, wie aus Figur 7 zu erkennen ist, eine nahezu konstante Wanddicke auf. Lediglich im Bereich der öffenbaren Schmalseite 107 ergibt sich durch Überlappung eine Wandverdopplung. Die mit den Anlageflächen 108 bzw. 109 versehenen Vorsprünge sind in Wandabschnitte der Schenkel 102 und 103 ausgeprägt. Dazu ist die Schutzumhüllung 101 an ihren Schenkeln 102 und 103 bzw. Breitseiten 104 und 105 wellenartig profiliert, wobei die nach innen weisenden Kämme der Profilierung die Anlageflächen 108 bzw. 109 zum Halten der elektrischen Leitung E bilden.

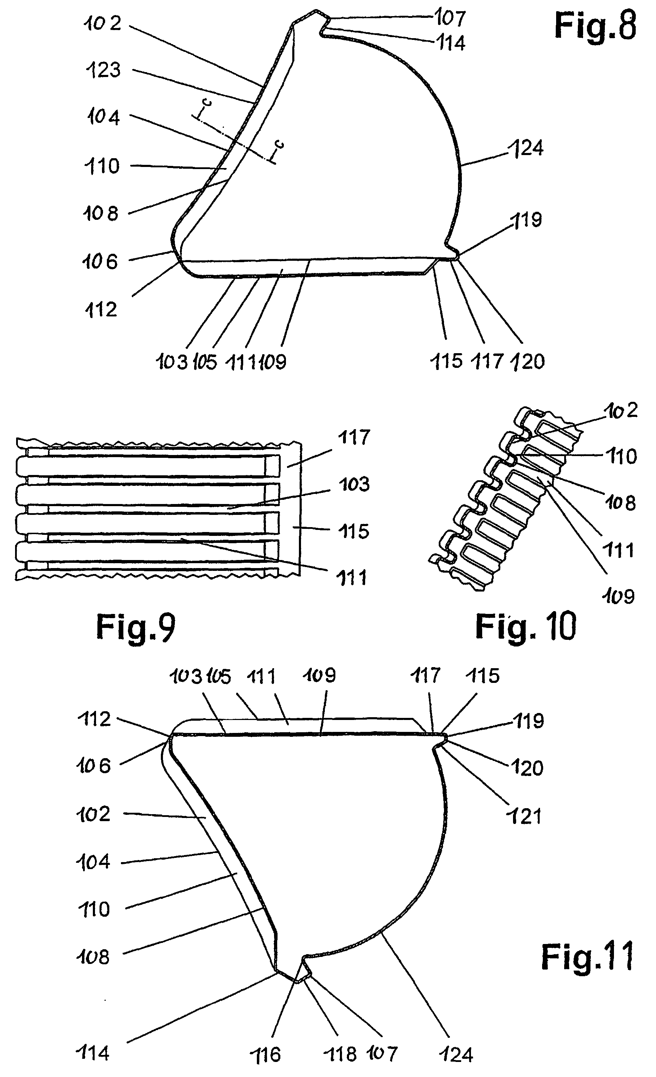

Prinzipiell ist es möglich, zum Zweck des Haltens oder des Klemmens der elektrischen Leitung E die wellenartige Profilierung in Längsrichtung der Schutzumhüllung oder auch in Breitenrichtung desselben auszubilden. Letzteres ist besonders dann zu bevorzugen, wenn eine relativ hohe Biegesteifigkeit gewünscht wird. In dem beschriebenen Ausführungsbeispiel ist jedoch, wie in den Figuren 9 und 10 dargestellt, die wellenartige Profilierung in Längsrichtung der Schutzumhüllung 101 angeordnet, wobei sich die Wellenkämme quer zur Längsrichtung erstrecken. Hierdurch wird ein weiches Biegeverhalten erzielt, so daß die Schutzumhüllung 101 mit der elektrischen Leitung E flexibel verlegt werden kann. Die wellenartige Profilierung in Längsrichtung erlaubt es, die Schutzumhüllung 101 auch mit verhältnismäßig kleinen Krümmungsradien um eine Querachse, d.h. um eine Achse in Breitenrichtung zu biegen. Hierbei sind Krümmungsradien möglich, die mit glattwandigen, nicht-profilierten Schutzumhüllungen nicht mehr realisiert werden können. Zur Erzielung einer besonders hohen Nachgiebigkeit können auch an den Schmalseiten 106 und 107 die Biegung begünstigende, wellenartige Profilierungen vorgesehen werden.

Die wellenartige Profilierung ist hier solchermaßen ausgebildet, daß die außenliegenden, abgeplatten Wellenkämme jeweils mit der Außenwand der Schenkel 102 und 103 glattflächig abschließen, wie dies in den Figuren 7, 8, 11 und 12 gezeigt ist. Die einwärts gerichteten Vorsprünge der Profilierung sind als nutförmige Rippen oder Einwölbungen 110 bzw. 111 ausgebildet, wobei die Rippen oder Einwölbungen 110 bzw. 111 zur Innenseite der Schutzumhüllung 101 hin ebenfalls abgeplattet sind. Die Rippen oder Einwölbungen 110 bzw. 111 erstrecken sich jeweils im wesentlichen über die gesamte Quererstreckung der Schenkel 102 und 103. Dadurch werden bei engeren Krümmungsradien Beschädigungen an den Schenkeln 102 und 103 vermieden. Weiterhin laufen die Rippen oder Einwölbungen 110 bzw. 111 in Breitenrichtung jeweils flach geneigt zu einer Außenoberfläche des jeweiligen Schenkels 102 bzw. 103 hin aus, ohne daß diese die Schmalseiten 106 bzw. 107 erreichen. Damit ergibt sich für die Schutzumhüllung 101 eine insbesondere an den Ecken des Querschnittsprofils glatte Ausbildung, so daß bei der Montage der Schutzumhüllung 101 an einem Einbauort ein Verhaken mit dort befindlichen Kanten oder Vorsprüngen vermieden wird.

Bei dem dargestellten Ausführungsbeispiel ist einer der Schenkel, hier der in Figur 7 untenliegende Schenkel 103 im wesentlichen eben ausgebildet. Der gegenüberliegende Schenkel 102 ist hingegen nach innen gebogen und weist damit eine im Querschnitt im wesentlichen konvexe Form auf, wobei die größte Durchbiegung bevorzugt in der Mitte des Schenkels 102 liegt. Weiterhin sind auch die an diesem Schenkel 102 vorgesehenen Rippen oder Einwölbungen 110 im Querschnitt mit einer nach innen gebogenen Anlagefläche 108 ausgebildet. Bei einem Schließen der Schutzumhüllung 101 wird damit eine Beschädigung der elektrischen Leitung E, insbesondere einer elektrischen Flachleitung verhindert. Im geschlossenen Zustand liegen die Rippen oder Einwölbungen 110 jeweils zumindest mit dem am weitesten einwärts gebogenen Abschnitt, vorzugsweise einem Mittelabschnitt der jeweiligen Anlagefläche 108 gegen eine Seite einer elektrischen Leitung E an. Die Krümmung des Schenkels 102 sowie auch der Anlageflächen 108 an den Rippen oder Einwölbungen 110 erlaubt eine selbsttätige Anpassung der Schutzumhüllung 101 an elektrische Leitungen E mit unterschiedlicher Dicke oder an Leitungsstapel mit mehreren, übereinander angeordneten elektrischen Leitungen E. Bei einer größeren Dicke werden sowohl die gekrümmten Anlageflächen 108 der Rippen oder Einwölbungen 110 abgeflacht, so daß diese über eine größere Breite gegen die elektrische Leitung oder Leitungen E anliegen, als auch der Schenkel 102 elastisch nach außen gedrückt.

Weiterhin ist es auch möglich, beide Schenkel 102 und 103 gleichartig, d.h. entweder beide eben oder beide gekrümmt auszubilden. Entsprechendes gilt auch für die Anlageflächen 108 und 109. Zudem kann ein ebener Schenkel mit einer gekrümmten Anlagefläche oder ein gekrümmter Schenkel mit einer ebenen Anlagefläche kombiniert werden.

Im folgenden sollen nun die beiden Schmalseiten 106 und 107 näher erläutert werden. Die Schenkel 102 und 103 sind an einer Schmalseite 106 mittels eines elastisch verformbaren Gelenks 112 einstückig miteinander gekoppelt. Die gegenüberliegende Schmalseite 107 ist hingegen als Verschluß 113 ausgebildet, der je nach Bedarf geöffnet und wieder geschlossen werden kann, um die Schutzumhüllung 101 mit einer oder mehreren elektrischen Leitungen E zu bestücken.

Das Gelenk 112 ist hier als bogenförmig gekrümmter Wandabschnitt ausgebildet. Dieser geht stufenlos in die beiden Schenkel 102 und 103 über und verbindet diese zumindest an der Außenseite glattflächig miteinander. Das Gelenk 112 befindet sich in der in Figur 12 dargestellten Stellung in seinem entspannten, unverformten Zustand, in den es bei einer Auslenkung selbsttätig zurückkehrt, sofern dies nicht durch eine Verrastung des Verschlusses 113 an der gegenüberliegenden Schmalseite 107 verhindert wird. Bevorzugt schließen die Schenkel 102 und 103 im entspannten Zustand bei Betrachtung im Querschnitt einen Winkel von 45 bis 110 Grad ein. In dem ersten Ausführungsbeispiel beträgt dieser Winkel 60 Grad.

Der Verschluß 113 umfaßt als erstes Teil einen an einen Schenkel 102 angeformten Seitenwandabschnitt 114, der wie in Figur 7 gezeigt, in der verrasteten Stellung einen an dem anderen Schenkel 103 angeformten Seitenwandabschnitt 115 als weiteres Verschlußteil von außen her umgreift. In einer alternativen Ausführungsvariante kann der Schenkel 103 auch ohne einen besonders ausgeprägten Seitenwandabschnitt 115 ausgebildet werden. Der umgreifende Seitenwandabschnitt 114 erstreckt sich dann um einen Rand des Schenkels 103 herum, der seiner Funktion nach als umgriffener Seitenwandabschnitt 115 angesehen werden kann.

An dem umgreifenden Seitenwandabschnitt 114 sowie auch an dem umgriffenen Seitenwandabschnitt 115 ist jeweils eine Haltefläche 116 bzw. 117 vorgesehen. Die Halteflächen 116 und 117 sind im verrasteten Zustand durch die Rückstellwirkung der gelenkigen Verbindung 112 gegeneinander verspannt. Die Haltefläche 116 des umgreifenden Seitenwandabschnittes 114 ist an einer Innenwand desselben vorgesehen, wohingegen die Haltefläche 117 an dem anderen Seitenwandabschnitt 115 an einer Außenwand desselben liegt Wie Figur 7 weiterhin zu entnehmen ist, erstreckt sich die Berührebene der Halteflächen 116 und 117 im wesentlichen parallel zu der Haupterstreckungsebene der elektrischen Leitung E. Dies gilt zumindest für den Bereich der umliegenden Anlageflächen 108 und 109, wobei hier zu berücksichtigen ist, daß die Schutzumhüllung 101 den räumlichen Gegebenheiten am Einbauort angepaßt wird und daher zumeist einen kurvigen Verlauf nimmt. Die Rückstellkraft des Gelenks 112 wirkt im wesentlichen parallel zu einer die elektrische Leitung E festhaltenden Klemmkraft zwischen den Anlageflächen 108 und 109.

Durch eine verhältnismäßig großflächige Überlappung der Halteflächen 116 und 117 wird ein versehentliches Lösen des Verschlusses 113 verhindert Als Sicherung gegen ein vermeintliches Aufweiten der Schutzumhüllung 101 durch entgegengerichtete Druckkräfte auf die Schmalseiten 106 und 107, infolgedessen eine zwischen den Anlageflächen 108 und 109 normalerweise eingeklemmte elektrische Leitung E verrutschen könnte, sind in Querrichtung an den Seitenwandabschnitten 114 und 115 zusätzliche Querhalteflächen 118 und 119 vorgesehen. Im verrasteten Zustand stützen sich die Seitenwandabschnitte 114 und 115 über diese Querhalteflächen 118 und 119 gegeneinander ab, wobei die Querhaltefläche 119 des Seitenwandabschnittes 115 an einer Außenwand desselben, die Querhaltefläche 118 hingegen an einer Innenwand des Seitenwandabschnittes 114 liegt. In dem dargestellten Ausführungsbeispiel schließen die Querhalteflächen 118 und 119 jeweils rechtwinklig an die Halteflächen 116 und 117 der entsprechenden Seitenwandabschnitte an.

Der umgriffene Seitenwandabschnitt 115 bildet gewissermaßen einen Vorsprung 120, über den der umgreifende Seitenwandabschnitt 114 beim Schließen der Schutzumhüllung 101 hinüberschnappt. Um die hierfür erforderlichen Kräfte möglichst gering zu halten und um zudem ein sicheres Verrasten zu gewährleisten, ist an dem freien Profilende des umgriffenen Seitenwandabschnittes 115 ein Gleitflächenabschnitt 121 vorgesehen, der in Richtung des Scheitels des Vorsprungs 120 geneigt ist Beim Schließen der Schutzumhüllung 101 gelangt eine Kante der Haltefläche 116 des umgreifenden Seitenwandabschnittes 114 zur Anlage gegen den Gleitflächenabschnitt 121 und wird während des weiteren Schließens durch diesen unter elastischer Verformung über den Vorsprung 120 gehoben. Nach Überschreiten des Scheitels verrastet die Haltefläche 116 hinter dem Vorsprung 120. Zwischen dem Gleitflächenabschnitt 121 und der Innenwand des umgreifenden Seitenwandabschnittes 114 bleibt ein geringfügiger Spalt 122 bestehen.

Wie insbesondere aus den Figuren 8 bis 11 entnommen werden kann, ist die Schutzumhüllung 101 aus einem Vorstück 123 hergestellt, das ein geschlossenes Querschnittsprofil mit einer wesentlichen dreieckartigen Querschnittsform aufweist. Dabei sind die bereits in ihrer Endform ausgebildeten Schenkel 102 und 103 als Dreiecksschenkel nicht nur an dem Gelenk 112, d.h. der Schmalseite 106 bzw. "Dreiecksspitze", sondern auch an der verbleibenden Schenkelseite über einen zusätzlichen Wandabschnitt 124 miteinander verbunden. Die Elemente des Verschlusses 113, insbesondere die Halteflächen 116 und 117 sowie die Querhalteflächen 118 und 119 und der Gleitflächenabschnitt 121 an dem Vorsprung 120 sind bereits vorhanden.

Durch ein Heraustrennen des Wandabschnittes 124 mittels zweier vorzugsweise parallel geführter Schnitte entlang der Längserstreckungsrichtung des Vorstückes 123 werden die Verschlußteile an den Seitenwandabschnitten 114 und 115 unmittelbar verbindungsfertig hergestellt, so daß diese bei einer Konfektionierung nur noch zusammengefügt werden müssen.

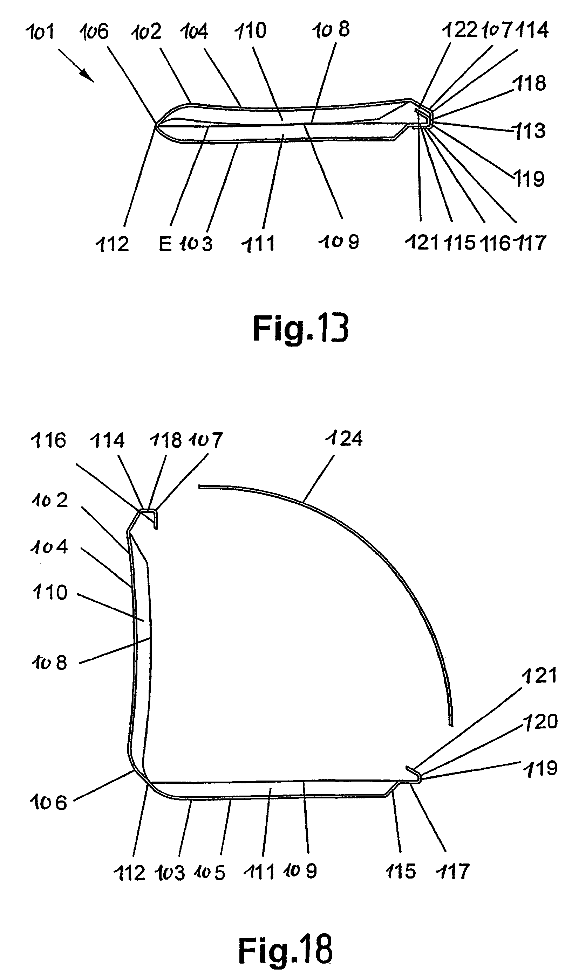

Ein weiteres Ausführungsbeispiel ist in den Figuren 13 bis 18 dargestellt. Dieses entspricht im wesentlichen dem vorstehend erläuterten Ausführungsbeispiel, so daß für gleichartige Elemente die Bezugszeichen des vorbeschriebenen Ausführungsbeispiels verwendet werden. Im Unterschied zu diesem weist die Schutzumhüllung nach diesem weiteren Ausführungsbeispiel einen größeren Spreizungswinkel der Schenkel 102 und 103 in der entspannten Offenstellung auf. Dieser liegt hier bei 90 Grad.

Bevorzugt ist die gesamte Schutzumhüllung 101 aus einem extrudierbaren Kunststoff hergestellt Das Vorstück 123 kann somit als Endlosmaterial gefertigt werden. Von diesem werden für die Schutzumhüllung 101 benötigte Stücke in beliebiger Länge abgetrennt Als Kunststoffmaterial hat sich vor allem thermoplastisches Material als besonders vorteilhaft erwiesen.

Zur Herstellung der Schutzumhüllung 101 wird zunächst ein schlauchartiger Körper mit einem in Umfangsrichtung geschlossenen Profil gefertigt Dies kann beispielsweise durch Extrudieren eines einfachen Hohlprofils mit einem kreisförmigen oder kastenartigen Querschnitt erfolgen. Eine dreieckartige Grundform wird in einem thermischen Bearbeitungsvorgang erhalten, in dem das Ausgangsprofil entlang seiner Längserstreckungsrichtung bleibend umgeformt wird. Die Schenkel 102 und 103 der späteren Schutzumhüllung 101 sind damit bereits in einer Winkelstellung ausgebildet, die derjenigen der entspannten Offenstellung entspricht. Vorzugsweise erfolgt dies prozeßgünstig an dem noch warmen Profil unmittelbar anschließend an das Extrudieren. Hierbei kann gleichzeitig oder auch in einem weiteren Schritt eine wellenartige Profilierung an den Schenkeln 102 und 103 ausgebildet werden. Hierzu kann beispielsweise ein an sich bekannter Korrugator verwendet werden.

Aus dem geschlossenen Profil wird dann mittels zweier paralleler Schnitte in Längsrichtung des schlauchartigen Körpers der die Schenkel 102 und 103 verbindende Wandabschnitt 124 herausgetrennt. Mit dem Heraustrennen des Wandabschnittes 124 erfolgt gleichzeitig die Ausbildung der Teile des Verschlusses 113. Anschließend steht dann die Schutzumhüllung zur Bestückung bereit

## Patentansprüche

1. Schutzumhüllung für elektrische Flachleitungen, umfassend einen schlauchartigen Körper, der im Querschnitt annähernd kastenförmig mit zwei einander gegenüberliegenden Breitseiten (4, 5; 4', 5', 104, 105) und zwei einander gegenüberliegenden Schmalseiten (6, 7; 6', 7', 106, 107) ausgebildet ist, und der entlang mindestens einer seiner Schmalseiten (6, 7; 6', 7', 106, 107) einen lösbaren Verschluß (11; 11'; 113) aufweist, welcher durch jeweils an Wandabschnitte der Breitseiten (4, 5; 4', 5', 104, 105) einstückig angeformte, miteinander verrastbare Seitenwandabschnitte (12, 13, 12', 13', 114, 115) gebildet ist, **dadurch gekennzeichnet, daß** dessen Innenwand an den Breitseiten (4, 5; 4', 5' 104, 105) mit Anlageflächen (8, 9; 8', 9', 110, 111) zum Halten der elektrischen Leitung (E) zwischen diesen versehen ist, wobei die Anlageflächen (8, 9, 8', 9', 108, 109) sich im geschlossenen Zustand der Schutzumhüllung gegenseitig berühren und, bei eingelegter elektrischer Flachleitung, diese zwischen sich einklemmend halten.

2. Schutzumhüllung nach Anspruch 1, **dadurch gekennzeichnet, daß** wenigstens einer der Breitseiten (4, 5, 104, 105) eine wellenartige Profilierung aufweist, und die nach innen weisenden Kämme der Profilierung Anlageflächen (8, 9; 108, 109) zur Anlage gegen die elektrische Leitung (E) bilden.

3. Schutzumhüllung nach Anspruch 2, **dadurch gekennzeichnet, daß** die wellenartige Profilierung in Längsrichtung des schlauchartigen Körpers vorgesehen ist, derart, daß sich die Wellenkämme quer zur Längsrichtung erstrecken.

4. Schutzumhüllung nach einem der Ansprüche 1 bis 3, **dadurch gekennzeichnet, daß** in einem geschlossenen Zustand der Schutzumhüllung eine Abschlußkante (14) eines innenliegenden Seitenwandabschnittes (12) gegen die Innenwand der gegenüberliegenden Breitseite (5) anliegt.

5. Schutzumhüllung nach einem der Ansprüche 1 bis 4, **dadurch gekennzeichnet, daß** im geschlossenen Zustand eine Abschlußkante (15) des außenliegenden Seitenwandabschnittes (13) glattflächig mit einem angrenzenden Wandabschnitt einer Breitseite (4) abschließt.

6. Schutzumhüllung nach Anspruch 4 oder 5, **dadurch gekennzeichnet, daß** bei Betrachtung im Querschnitt die Abschlußkante (14) des innenliegenden Seitenwandabschnittes (12) zu der Haupterstreckungsrichtung der Breitseiten (4, 5) angewinkelt ist, wobei der Anstellwinkel im Bereich von 15 ° bis 75 °, vorzugsweise 30 ° bis 60 ° liegt.

7. Schutzumhüllung nach einem der Ansprüche 4 bis 6, **dadurch gekennzeichnet, daß** die Abschlußkante (14) des innenliegenden Seitenwandabschnittes (12) bei Betrachtung in Querrichtung nach außen vor der Abschlußkante (15) des außenliegenden Seitenwand-abschnittes (13) angeordnet ist.

8. Schutzumhüllung nach einem der Ansprüche 1 bis 7, **dadurch gekennzeichnet, daß** der innenliegende Seitenwandabschnitt (12) und der außenliegende Seitenwandabschnitt (13) jeweils eine im wesentlichen V-artige Profilform aufweisen.

9. Schutzumhüllung nach Anspruch 8, **dadurch gekennzeichnet, daß** die Spitze (18) der V-artigen Profilform auf der Höhe der Lage einer zwischen den Anlageflächen (8, 9) gehaltenen elektrischen Leitung (E) liegt.

10. Schutzumhüllung nach einem der Ansprüche 1 bis 9, **dadurch gekennzeichnet, daß** der Wandabschnitt (17), durch den der Trennschnitt geführt ist, zu einer Halteebene der elektrischen Leitung (E) geneigt ist

11. Schutzumhüllung nach einem der Ansprüche 1 bis 10, **dadurch gekennzeichnet, daß** der schlauchartige Körper an einer Schmalseite (6) einen Verschluß (11), an der anderen Schimalseite (7) hingegen eine gelenkige Verbindung aufweist.

12. Schutzumhüllung nach einem der Ansprüche 1 bis 11, **dadurch gekennzeichnet, daß** an beiden Schmalseiten (6, 7) jeweils ein Verschluß (11) vorgesehen ist.

13. Schutzumhüllung nach Anspruch 1, **dadurch gekennzeichnet, daß** die einander gegenüberliegenden Breitseiten (4', 5') jeweils in den Innenraum des schlauchartigen Körpers gerichtet konvex ausgebildet sind und die konvexen Innenwände der Breitseiten (4', 5') die Anlageflächen (8', 9') für die zu schützende Leitung (E) bilden.

14. Schutzumhüllung nach Anspruch 13, **dadurch gekennzeichnet, daß** die Seitenwandabschnitte (12', 13') nach außen gewölbt ausgebildet sind.

15. Schutzumhüllung nach Anspruch 1, **dadurch gekennzeichnet, daß** an dem Seitenwandabschnitt (114) eine innenliegende Haltefläche (116) vorgesehen ist, die im verrasteten Zustand gegen eine außenliegende Haltefläche (117) an dem anderen Schenkel (103) oder gegen den an diesen angeformten Seitenwandabschnitt (115) anliegt, wobei die beiden Halteflächen (116, 117) im verrasteten Zustand in einer Ebene liegen, die annähernd parallel zu einer Erstreckungsebene der elektrischen Leitung (E) zwischen unmittelbar benachbarten Anlageflächen (108, 109) ist.

16. Schutzumhüllung nach Anspruch 15, **dadurch gekennzeichnet, daß** an eines der Verschlußteile ein Gleitflächenabschnitt (121) angeformt ist, welcher bei einer ersten Anlage der Verschlußteile derart geneigt ist, daß bei einer Weiterführung der Schließbewegung das andere Verschlußteil an dem Gleichflächenabschnitt (121) zur Überwindung eines Rastvorsprunges geführt wird.

17. Verfahren zur Herstellung einer Schutzumhüllung nach den Ansprüchen 1 bis 16, bei dem zunächst ein schlauchartiger Körper mit einem in Umfangsrichtung geschlossenen Profil gefertigt wird, wobei der schlauchartige Körper zwei winklig miteinander verbundene Schenkel (102, 103) aufweist und durch einen weiteren Wandabschnitt (124) in Umfangsrichtung geschlossen ist, bei dem hernach der Wandabschnitt (124) herausgetrennt wird.

18. Verfahren nach Anspruch 17, **dadurch gekennzeichnet, daß** das Heraustrennen des Wandabschnittes (124) durch zwei parallele Schnitte erfolgt.

19. Verfahren nach Anspruch 17 oder 18, **dadurch gekennzeichnet, daß** mit dem Heraus-trennen des Wandabschnittes (124) die Ausbildung eines verrastbaren Verschlusses (113) an den Schenkeln (102, 103) vorgenommen wird.

20. Verfahren nach einem der Ansprüche 17 bis 19, **dadurch gekennzeichnet, daß** der schlauchartige Körper vor dem Heraustrennen des Wandabschnittes (124) mit einer wellenartigen Profilierung versehen wird.

## Claims

1. Protective covering for flat electrical cables comprising a tubular body which, in cross section, is approximately box-shaped with two wide sides (4, 5; 4', 5', 104, 105) facing each other and two narrow sides facing each other (6, 7; 6', 7', 106. 107) and which has along at least one of its narrow sides (6, 7; 6', 7', 106, 107) a detachable closure (11; 11'; 113) which is formed from interlatching one-piece moulded-on side wall sections (12, 13, 12', 13', 114, 115) in each case on wall sections of the wide sides (4, 5; 4', 5', 104, 105) **characterised in that** its internal wall on the wide sides (4, 5; 4', 5', 104, 105) is provided with contact surfaces (8, 9; 8', 9', 110, 111) to hold the electrical cable (E) between them, wherein the contact surfaces (8, 9; 8', 9', 108, 109) are in contact with each other when the protective covering is closed and, when the flat electrical cable is inserted, clamp it between them.

2. Protective covering according to claim 1 **characterised in that** at least one of the wide sides (4, 5, 104, 105) has a wavy profile and the internally facing ridges of the profile form contact surfaces (8, 9; 108, 109) to lie against the electrical cable (E).

3. Protective covering according to claim 2 **characterised in that** the wavy profile is provided in the longitudinal direction of the tubular body in such a way that the wave ridges extend transversely to the longitudinal direction.

4. Protective covering according to any one of claims 1 to 3 **characterised in that**, when the protective covering is closed, a terminal edge (14) of an internal side wall section (12) lies against the internal wall of the facing wide side (5).

5. Protective covering according to any one of claims 1 to 4 **characterised in that**, in closed state, one terminal edge (15) of the external side wall section (13) terminates smoothly with a contiguous wall section of a wide side (4).

6. Protective covering according to claim 4 or 5 **characterised in that**, when observed in cross section, the terminal edge (14) of the internal side wall section (12) is angled towards the main extension direction of the wide sides (4, 5) wherein the setting angle is in the range of 15 ° to 75 °, preferably 30 ° to 60 °.

7. Protective covering according to any one of claims 4 to 6 **characterised in that**, when observed in the transverse direction, the terminal edge (14) of the internal side wall section (12) is arranged outside in front of the terminal edge (15) of the external side wall section (13).

8. Protective covering according to any one of claims 1 or 7 **characterised in that** the internal side wall section (12) and the external side wall section (13) each have a substantially V-shaped profile.

9. Protective covering according to claim 8 **characterised in that** the tip (18) of the V-shaped profile lies at the height of the position of an electrical cable (E) held between the contact surfaces (8, 9).

10. Protective covering according to any of claims 1 to 9 **characterised in that** the wall section (17) through which the separating cut is led is inclined towards a holding plane for the electrical cable (E).

11. Protective covering according to any one of claims 1 to 10 **characterised in that** that tubular body has a closure (11) on one narrow side (6) but a flexible joint on the other narrow side (7).

12. Protective covering according any one of claims 1 to 11 **characterised in that** a closure (11) is provided on each of the two narrow sides (6, 7).

13. Protective covering according to claim 1 **characterised in that** the facing wide sides (4', 5') are each convex-shaped in the direction of the interior of the tubular body and the convex internal walls of the wide sides (4', 5') form the contact surfaces (8', 9') for the cable (E) to be protected.

14. Protective covering according to claim 13 **characterised in that** the side wall sections (12', 13') are arched outwards.

15. Protective covering according to claim 1 **characterised in that** on the side wall section (114), an internal holding surface (116) is provided which in latched condition lies against an external holding surface (117) on the other limb (103) or against the side wall section (115) moulded onto this wherein the two holding surfaces (116, 117) in latched condition lie in a plane which is approximately parallel to an extension plane of the electrical cable (E) between directly adjacent contact surfaces (108, 109).

16. Protective covering according to claim 15 **characterised in that** a sliding surface section (121) is moulded onto one of the closing parts with said sliding surface section being inclined in a first arrangement of the closing parts in such a way that, on an extension of the closing movement, the other closing part is led to the sliding surface (121) to overcome a latching projection.

17. Method for the production of a protective covering according to any one of claims 1 to 16 in which first a tubular body with a profile enclosed in the circumferential direction is produced wherein the tubular body has two limbs connected to each other at an angle (102, 103) and is enclosed by another wall section (124) in the circumferential direction in which after this the wall section (124) is separated out.

18. Method according to claim 17 **characterised in that** the separation out of the wall section (124) takes place by means of two parallel cuts.

19. Method according to claim 17 or 18 **characterised in that**, with the separation out of the wall section (124), a latching closure (113) is formed on the limbs (102, 103).

20. Method according to any one of claims 17 to 19 **characterised in that** the tubular body is provided with a wavy profile before the separation out of the wall section (124).

## Revendications

1. Gaine de protection pour lignes électriques plates, comprenant un corps de type tuyau dont la section transversale est approximativement en forme de boîte avec deux grands côtés (4, 5 ; 4', 5', 104, 105) opposés l'un à l'autre et deux petits côtés (6, 7 ; 6', 7', 106, 107) opposés l'un à l'autre, et qui comporte, le long d'au moins l'un de ses petits côtés (6, 7 ; 6', 7', 106, 107), une fermeture (11 ; 11', 113) séparable qui est formée par des portions de paroi latérales (12, 13 ; 12', 13', 114, 115) pouvant s'accrocher entre elles, formées d'une seule pièce sur des portions de paroi des petits côtés (4, 5 ; 4', 5', 104, 105), **caractérisée en ce que** sa paroi intérieure est pourvue, sur les petits côtés (4, 5 ; 4', 5', 104, 105), de surfaces de contact (8, 9 ; 8', 9', 110, 111) pour maintenir la ligne électrique (E) entre celles-ci, les surfaces de contact (8, 9 ; 8', 9', 108, 109) étant en contact réciproque à l'état fermé de la gaine de protection et, lorsque la ligne électrique plate est mise en place, elles maintiennent celles-ci entre elles en la serrant.

2. Gaine de protection selon la revendication 1, **caractérisée en ce qu'**au moins l'un des petits côtés (4, 5, 104, 105) présente un profilage de type ondulé, et les peignes du profilage, dirigés vers l'intérieur, forment des surfaces de contact (8, 9; 108, 109) destinées à s'appliquer contre la ligne électrique (E).

3. Gaine de protection selon la revendication 2, **caractérisée en ce que** le profilage de type ondulé est prévu dans la direction longitudinale du corps de type tuyau, de manière que les peignes ondulés s'étendent transversalement à la direction longitudinale.

4. Gaine de protection selon l'une des revendications 1 à 3, **caractérisée en ce qu'**à l'état fermé de la gaine de protection, un bord de terminaison (14) d'une portion de paroi latérale (12) située à l'intérieur s'applique contre la paroi intérieure du petit côté (5) opposé.

5. Gaine de protection selon l'une des revendications 1 à 4, **caractérisée en ce qu'**à l'état fermé, un bord de terminaison (15) de la portion de paroi latérale (13) située à l'extérieur se termine à plat sur une portion de paroi adjacente d'un petit côté (4).

6. Gaine de protection selon la revendication 4 ou 5, **caractérisée en ce que**, vu en coupe transversale, le bord de terminaison (14) de la portion de paroi latérale (12) située à l'intérieur est coudé par rapport à la direction de l'étendue principale des petits côtés (4, 5), l'angle d'inclinaison étant compris entre 15° et 75°, de préférence entre 30° et 60°.

7. Gaine de protection selon l'une des revendications 4 à 6, **caractérisée en ce que** le bord de terminaison (14) de la portion de paroi latérale (12) située à l'intérieur, vu en coupe transversale, est disposé vers l'extérieur devant le bord de terminaison (15) de la portion de paroi latérale (13) située à l'extérieur.

8. Gaine de protection selon l'une des revendications 1 à 7, **caractérisée en ce que** la portion de paroi latérale (12) située à l'intérieur et la portion de paroi latérale (13) située à l'extérieur présentent chacune une forme profilée sensiblement en V.

9. Gaine de protection selon la revendication 8, **caractérisée en ce que** le sommet (18) de la forme profilée en V se situe à la hauteur de la position d'une ligne électrique (E) maintenue entre les surfaces de contact (8, 9).

10. Gaine de protection selon l'une des revendications 1 à 9, **caractérisée en ce que** la portion de paroi (17), par laquelle passe la coupe de séparation, est inclinée par rapport à un plan de maintien de la ligne électrique (E).

11. Gaine de protection selon l'une des revendications 1 à 10, **caractérisée en ce que** le corps de type tuyau présente sur un petit côté (6), une fermeture (11), et sur l'autre petit côté (7), une liaison articulée.

12. Gaine de protection selon l'une des revendications 1 à 11, **caractérisée en ce que** sur chacun des deux petits côtés (6, 7) est prévue une fermeture (11).

13. Gaine de protection selon la revendication 1, **caractérisée en ce que** les grands côtés (4', 5') opposés l'un à l'autre sont réalisés chacun convexes dans le volume intérieur du corps de type tuyau, et les parois intérieures convexes des grands côtés (4', 5') forment les surfaces de contact (8', 9') pour la ligne (E) à protéger.

14. Gaine de protection selon la revendication 13, **caractérisée en ce que** les portions de paroi latérale (12', 13') sont bombées vers l'extérieur.

15. Gaine de protection selon la revendication 1, **caractérisée en ce que** sur la portion de paroi latérale (114) est prévue une surface de maintien (116) située à l'intérieur qui, à l'état accroché, s'applique contre une surface de maintien (117) située à l'extérieur sur l'autre branche (103) ou contre la portion de paroi latérale (115) formée sur celle-ci, les deux surfaces de maintien (116, 117) se situant, à l'état accroché, dans un plan qui est approximativement parallèle à un plan d'étendue de la ligne électrique (E) entre des surfaces de contact (108, 109) directement adjacentes.

16. Gaine de protection selon la revendication 15, **caractérisée en ce que** sur l'une des parties de fermeture est formée une portion de surface de glissement (121) qui, dans un premier contact des parties de fermeture, est inclinée de manière que pendant la poursuite du mouvement de fermeture, l'autre partie de fermeture est guidée sur la portion de surface de glissement (121) pour franchir une saillie d'encliquetage.

17. Procédé de fabrication d'une gaine de protection selon les revendications 1 à 16, dans lequel un corps de type tuyau est d'abord réalisé avec un profilé fermé dans la direction périphérique, le corps de type tuyau comportant deux branches (102, 103) reliées entre elles en angle, et est fermé par une autre portion de paroi (124) dans la direction périphérique, dans lequel la portion de paroi (124) est ensuite séparée.

18. Procédé selon la revendication 17, **caractérisé en ce que** la séparation de la portion de paroi (124) s'effectue par deux coupes parallèles.

19. Procédé selon la revendication 17 ou 18, **caractérisé en ce qu'**avec la séparation de la portion de paroi (124), il est procédé à la réalisation d'une fermeture (113) à accrochage sur les branches (102, 103).

20. Procédé selon l'une des revendications 17 à 19, **caractérisé en ce que** le corps de type tuyau est pourvu, avant la séparation de la portion de paroi (124), d'un profilage de type ondulé.
